Europäisches Patentamt

European Patent Office

Office européen des brevets

(11) Publication number: **0 088 507**
**B1**

(12) **EUROPEAN PATENT SPECIFICATION**

(45) Date of publication of patent specification: **01.10.86**

(21) Application number: **83300457.5**

(22) Date of filing: **28.01.83**

(51) Int. Cl.⁴: **F 16 L 47/06, F 16 L 21/06**

(54) Improvements in pipe couplings and coupled pipe joints.

(30) Priority: **19.02.82 GB 8204935**

(43) Date of publication of application:
**14.09.83 Bulletin 83/37**

(45) Publication of the grant of the patent:
**01.10.86 Bulletin 86/40**

(84) Designated Contracting States:
**AT BE CH DE FR IT LI LU NL SE**

(56) References cited:
**CH-A- 250 454**
**DE-U-8 015 790**
**US-A-2 828 525**
**US-A-4 018 462**

(73) Proprietor: **KAY & COMPANY (ENGINEERS) LIMITED**
**Acresfield House Exchange Street**
**Bolton Lancashire BL1 1RS (GB)**

(72) Inventor: **Large, Jack Adrian**
**206 Manchester Road**
**Westhoughton Lancashire (GB)**

(74) Representative: **King, James Bertram**
**Kings Patent Agency Limited**
**146a Queen Victoria Street**
**London EC4V 5AT (GB)**

Courier Press, Leamington Spa, England.

## Description

This invention relates to pipe couplings which are to provide a pipe joint of high mechanical strength for use with pipes of plastics.

This invention is particularly directed to the provision of a pipe jointing system for pipes having an outside diameter greater than 63 mm, although the invention may equally be used with pipes of smaller diameters.

Up to and including pipes of 63 mm diameter or thereabouts, the associated pipe fittings, of the widely used compression type, comprise a body with a prepared socket to accept the pipe and a metallic or resilient rubber-like sealing ring located in a prepared annular chamfer in the socket mouth. This sealing ring is operatively contacted by a nut coacting with a screw thread on the fitting body and the tightening of the nut closes the sealing ring down circumferentially onto the pipe to provide both a seal and to mechanically grip the pipe. There are many variations on this principle some of which have been developed to a high degree of sophistication.

However, the limit of the capability of this type of joint is finally determined by the size of the nut and the associated spanner and effort required to tighten it. This limitation is normally reached at about 65 mm pipe diameter and at sizes above this the nuts become so large that the physical effort required to tighten them becomes unacceptable.

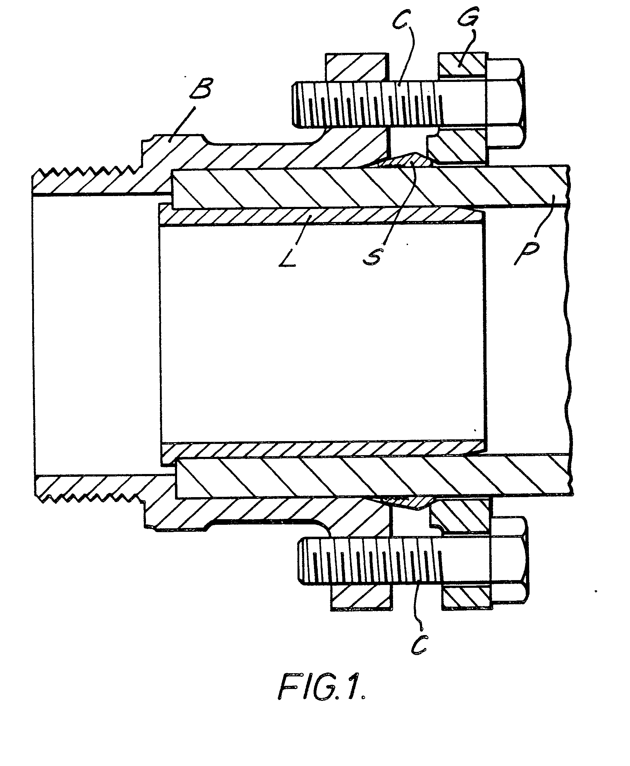

On pipe sizes larger than this, the traditional solution is to use fittings operating on a similar principle, with a body having prepared socket and sealing ring, but equipped with a flange and a mating gland having a number of tie bolts or set screws spaced around the periphery and which can be tightened in sequence to drive the gland forward and thus close down the compression ring (see Figure 1). Inevitably fittings of this type are bulky and there are a large number of components involved, in consequence the costs of such fittings become disproportionately high at the point of transition from the largest of the nut types to the smallest of the gland/flange types.

In the field of small diameter and relatively low pressure pipes such as automobile cooling systems it is known to secure rubber hoses on spigot fittings using annular clamping bands. Clamping bands which can be used for this purpose and having some of the features of the clamp specified in claim 1 are disclosed in US—A—2828525 and CH—A—250454 as examples. It is also known to provide deformations in a spigot to provide a means for gripping a pipe internally (see DE—U—8015790) to form a seal. The formations comprising saw-tooth serrations form the sole means of retention.

If the pipe system is such that corrosion is not of vital importance the flange type fittings previously referred to can be manufactured from ferrous materials such as ductile or malleable iron or steel whereby the costs are not prohibitive. However, if corrosion resistance is required and flange type fittings are manufactured from nonferrous materials such as bronze or gunmetal, then costs rise dramatically and indeed may become unacceptable.

One main object of this invention is to produce a joint of the required standard, using less material and components than the flange type fittings in order than non-corrosive joint systems can be made without costs being prohibitive. The invention is not necessarily confined to nonferrous materials but could also be equally applied to ferrous materials.

According to this invention there is provided a pipe coupling for industrial use with plastics pipes of over 50 mm in diameter, The coupling comprising a tubular body with a pipe fitting or connection at one end, the other end having a sleeve portion to be secured to the plastics pipe with an annular member located around the pipe periphery and a bolt operative on the annular member to secure the pipe and fitting, characterised by the sleeve comprising a spigot having a series of outer circumferential annular serrations, the annular member comprising a split annular clamp embracing the periphery of the pipe over substantially the length of the serrations, the clamp having lugs each side of the division, the lugs having bores to receive the clamp bolt, each lug having on a side opposed to the division an arcuate surface, the bolt acting through bearing blocks on each lug, each block and a respective lug having complementary cylindrical coating arcuate surfaces permitting relative movement about a line extending parallel with the longitudinal axis of the coupling, the serrations being shaped so as to cut into the inner surface of the pipe on the clamp being compressed about the pipe to deform same to provide a mechanical lock securing the pipe on the sleeve against mechanical loads.

The serrations preferably are close spaced and of saw tooth shape, the ramp surface of which lies in the direction of the end of the sleeve. Advantageously the serrations are arranged by their angle and width to penetrate sufficient to provide resistance to rated tensile loads of the pipe.

The couplings are for use on plastic pipes particularly those of high quality and controlled specification for use in the conveyance of natural gas and liquid petroleum gas. The same couplings can be used for water supply and similar less stringent applications.

The invention is further described and illustrated with reference to the accompanying drawings and by way of an embodiment shown as an example in Figures 2 to 5.

In the drawings:—

Figure 1 shows a longitudinal section through a known prior-art coupling for larger diameter pipes,

Figures 2a and 2b show in side view, a pipe coupling according to this invention before and after tightening respectively,

Figures 3a and 3b show end views of the coupling shown in Figures 2a and 2b respectively,

Figures 4a and 4b show part sections on A—A and B—B through the coupling of Figures 3a and 3b respectively, and

Figure 5 shows a detail of a bearing block.

*Prior Art Drawing*

Referring firstly to Figure 1 showing known art this comprises a gland coupling with a body B, sealing ring S, gland G, a number of bolts or set screws C and an internal liner L to support the polyethylene pipe P. This liner L is essential to provide support for the pipe and resistance to inward collapse under the forces imparted by the compression rings. The actual sealing joint is made on the outside surface of the pipe P.

*Description of Embodiment of Invention*

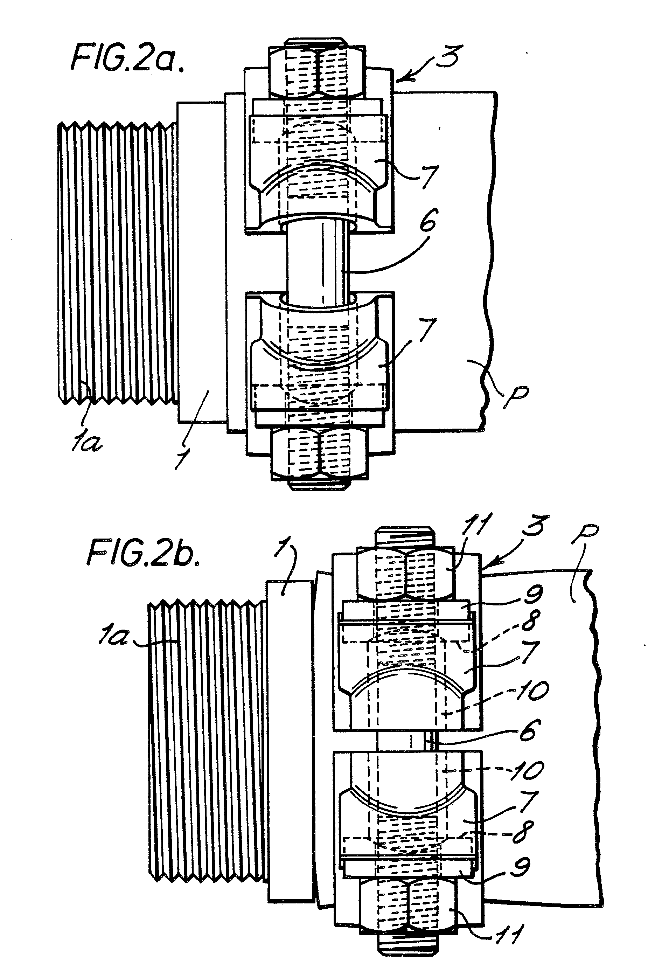

Figures 2, 3 and 4 show a coupling according to the invention. This fitting has no body barrel in the conventional sense and thus eliminates the heaviest and most expensive single item. The liner which is essential to support the pipe is formed to serve the dual purpose of support liner and body. The sealing joint is effected on the inside diameter of the pipe instead of the outside as in known devices.

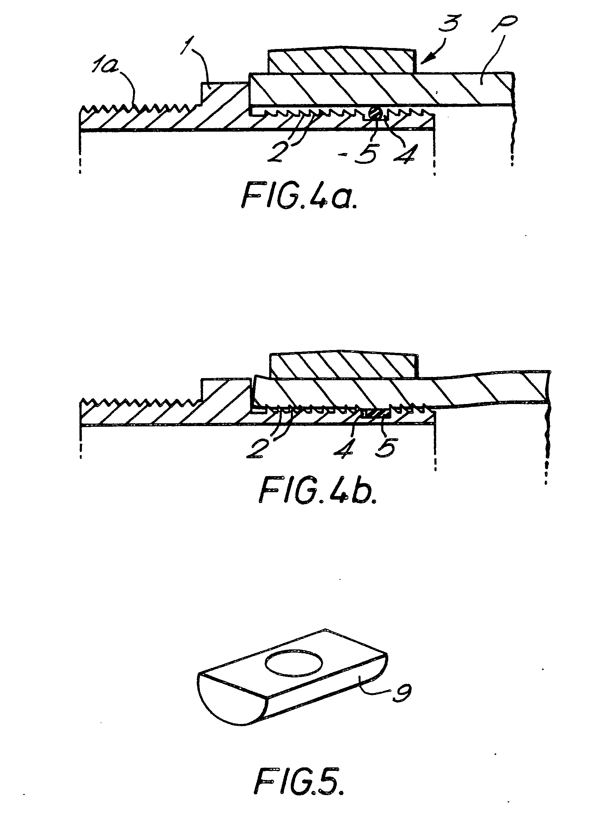

In the drawings the body liner 1 is for purpose of illustration shown as terminating in a male screw thread 1a, but could be a female thread, or a flange to connect up with a mating flange on, for example, a valve, or the body liner could be made double ended for a pipe joint for plastic pipe to plastic pipe to be made at each end as would be the case in a straight coupling. The body of the liner is made to a diameter which will easily slide into the bore of the plastic pipe and is provided with a number of annular serrations 2 (see Figure 4) the purpose of which are to penetrate the inside wall of the plastic pipe to a controlled and limited amount when the pipe is closed downwards under the action of the clamp 3. The penetration of these serrations provide the joint with the mechanical strength required to make the joint stronger than the pipe itself when submitted to a tensile pull to failure point of the pipe. The body liner is further provided with an accurately machined groove 4 (Figure 4) in which is located an "O" ring 5 the purpose of which is to provide a hermetic gas or fluid seal on the inside of the pipe.

The clamp 3 is actuated by means of a single low stressed bolt or stud of ample proportions 6.

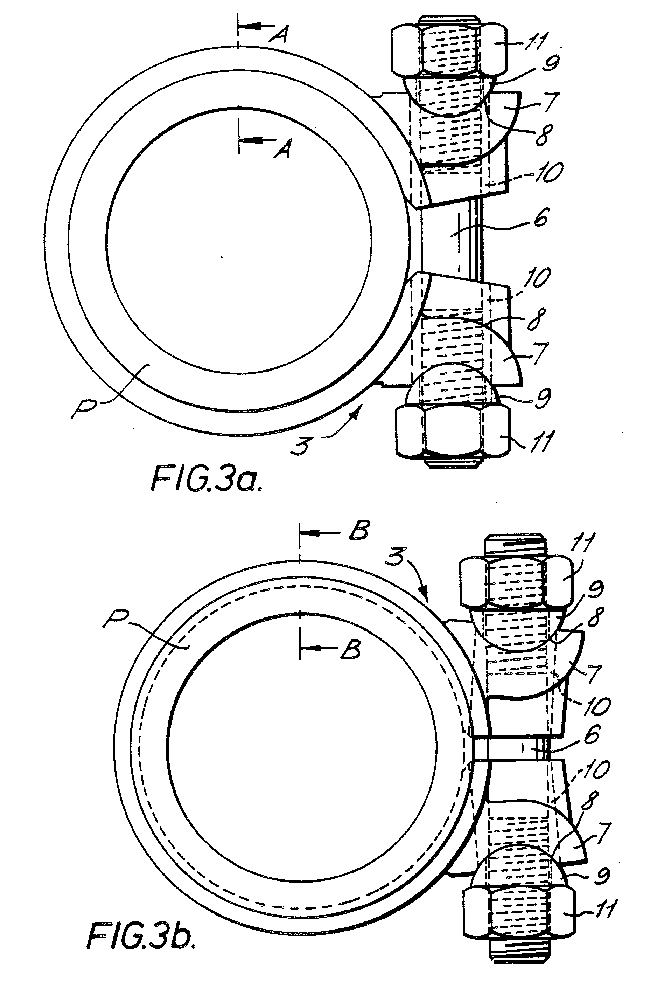

Reference to Figures 2b, 3b and 4b shows the finally tightened position and the relative movement of the lugs from the untightened position shown in Figures 2a, 3a and 4a. Considerable movement takes place in the tightening and arrangements are provided to ensure that there is no side-strain or binding on the bolt. This is achieved in the following manner: The clamp lugs 7 are laterally machined in the form of a segment of a circle 8. Located in these segments are half round blocks 9 (see Figure 5) centrally drilled to accept the bolt 6 and free to axially rock in the circular segment 8. The clamp lugs 7 are bored with a clearance hole 10 sufficiently large to provide clearance on the bolt when the lugs have undergone maximum movement due to closing, and as illustrated in Figure 2b. It will be seen from Figure 3b that in the fully tightened position the bolts are correctly longitudinally loaded, and that no side-strains or binding arises due to the closing action of the clamp. The bolts are tightened by action on the nuts 11, located one at each end of the bolt.

With a conventional fitting using a nut or glands with bolts, the forces applied are parallel to the axis of the pipe, and the radially closing down effect is only achieved by the diversion of sealing rings or similar down an inclined surface of an annular bevel, i.e. only a part of the applied effort is available for closing down. On the clamp of this invention the bolt is working at right angles to the pipe axis and thus practically the whole of the effort applied is available to force the pipe downwards to overcome the wide tolerance possibility and also to sink the inside of the tube into the serrations. In this way only one bolt is required instead of the 4 or more on a conventional design.

The number and depth of serrations is important as the serrations have the effect of creating a multiple shear resistance to the pull of the pipe under tension. If the shape of the serrations allows too much penetration into the pipe, then the pipe would be weakened and fail within the joint. If there were too few serrations then there would be an insufficient multiple shear resistance and the pipe would pull out before pipe failure occurred. ($4\frac{1}{2}$ tonnes resistance required at 90 mm size). If there were too many serrations then insufficient penetration occurs, this is because the total effort applied by the clamp is finally resisted by the number of serrations. Because the clamp is more effective in closing force than the conventional types, then the serrations can be grouped in a much smaller space. In this way the body liner is much shorter than the liner on a conventional fitting with consequent savings in materials and costs.

Claims

1. A pipe coupling for industrial use with plastics pipes of over 50 mm in diameter, the coupling comprising a tubular body (1) with a pipe fitting or connection (1a) at one end, the other end having a sleeve portion to be secured to the plastics pipe (P) with an annular member (3) located around the pipe periphery and a bolt (6) operative on the annular member to secure the pipe and fitting, characterised by the sleeve comprising a spigot having a series of outer circumferential annular serrations (2), the annular member comprising a split annular clamp (3) embracing the periphery of the pipe (P) over substantially the length of the serrations, the clamp (3) having lugs (7) each side of the division, the lugs (7) having bores (10) to receive the clamp bolt (6), each lug (7) having on a side opposed to the division an arcuate surface (8), the bolt (6) acting through bearing blocks (9) on each lug, each block (9) and a respective lug (6) having complementary cylindrical coacting arcuate surfaces (8) permitting relative movement about a line extending parallel with the longitudinal axis of the coupling, the serrations (2) being shaped so as to cut into the inner surface of the pipe (P) on the clamp (3) being compressed about the pipe (P) to deform same to provide a mechanical lock securing the pipe on the sleeve against mechanical loads.

2. A pipe coupling in accordance with Claim 1, wherein an annular groove (4) is provided in the outer periphery of the sleeve (1) between two groups of serrations (2), the groove (4) containing an "O" ring (5) to sealingly engage the bore of the pipe (P), when the pipe is brought into compressive engagement therewith.

3. A pipe coupling in accordance with Claim 1, wherein the serrations (2) are close spaced and of saw-tooth shape the ramp surface of which is of frusto-conical shape with the apex extending in the direction of the pipe.

## Patentansprüche

1. Rohrkupplug zur industriellen Verwendung mit Plastikrohren von über 50 mm im Durchmesser, wobei die Kupplung einen rohrförmigen Körper (1) mit einem Rohrformstück oder -verbindungsstück (1a) an einem Ende umfaßt, wobei das andere Ende einen Hülsenabschnitt hat, der an dem Plastikrohr (P) mit einem ringförmigen Teil (3), das um den Rohrrand herum angeordnet ist, und einem Bolzen (6) zu befestigen ist, der an dem ringförmigen Teil wirksam ist, um das Rohr und das Rohrformstück zu sichern, dadurch gekennzeichnet, daß die Hülse einen Zapfen aufweist, der eine Reihe von äußeren ringförmigen Umfangszähnen (2) hat, das ringförmige Teil eine geteilte ringfömige Rohrschelle (3) aufweist, die den Rand des Rohres (P) im wesentlichen über die Länge der Zähne umfaßt, die Rohrschelle (3) Ösen (7) auf jeder Seite der Teilung hat, die Ösen (7) Bohrungen (10) zum Aufnehmen des Rohrschellen-bolzents (6) haben, jede Öse (7) auf einer zu der Teilung gegenüberliegenden Seite eine gebogene Fläche (8) hat, der Bolzen (6) durch Lagerblöcke (9) auf jede Öse einwirkt, jeder Block (9) und eine zugehörige Öse (6) komplementäre zylindrische zusammenwirkende bogenförmige Flächen (8) haben, die eine Relativbewegung um eine parallel zu der Längsachse der Kupplung verlaufende Linie gestatten, die Zähne (2) so geformt sind, daß sie in die Innenfläche des Rohres (P) an der Rohrschelle (3) schneiden, die um das Rohr (P) zusammengedrückt wird, um daselbe zu verformen, um eine mechanische Sperre zu schaffen, welche das Rohr auf der Hülse gegen mechanische Belastungen sichert.

2. Rohrkupplung nach Anspruch 1, wobei eine ringförmige Nut (4) in dem äußeren Rand der Hülse (1) zwischen zwei Gruppen von Zähnen (2) vorgesehen ist, wobei die Nut (4) einen "O"-Ring (5) enthält, um an der Bohrung des Rohres (P) dichtend anzugreifen, wenn das Rohr in Presseingriff mit ihm gebracht wird.

3. Rohrkupplung nach Anspruch 1, wobei die Zähne (2) wenig voneinander beabstandet und sägezahnförmig sind, wobei ihre Rampenfläche kegelstumpfförmig ist, wobei der Scheitel in Richtung des Rohres verläuft.

## Revendications

1. Raccord de tube destiné à être utilisé industriellement avec des tubes de matière plastique ayant un diamètre supérieur à 50 mm, le raccord comprenant un corps tubulaire (1) ayant une connexion ou un embout de tuyauterie (1a) à une première extrémité, l'autre extrémité ayant une partie en forme de manchon destinée à être fixée au tube de matière plastique (P) avec un organe annulaire (3) placé autour de la périphérie du tube et un boulon (6) agissant sur l'organe annulaire afin qu'il fixe le tube à l'embout, caractérisé en ce que le manchon comprend un bout mâle ayant une série de dentelures annulaires circonférentielles externes (2), l'organe annulaire comprenant une pince annulaire fendue (3) entourant la périphérie du tube (P) pratiquement sur toute la longueur des dentelures, la pince (3) ayant des pattes (7) de part et d'autre de sa séparation, les pattes (7) ayant des trous (10) pour le passage d'un boulon (6) de serrage, chaque patte (7) ayant une surface courbe (8) du côté opposé à la séparation, le boulon (6) agissant sur chaque patte par l'intermédiaire de blocs d'appui (9), chaque bloc (9) et une patte respective (6) ayant des surfaces cylindriques courbes complémentaires coopérantes (8) permettant un déplacement relatif autour d'un axe parallèle à l'axe longitudinal du raccord, les dentelures (2) ayant une configuration telle qu'elles pénètrent dans la surface interne du tube (P) lors de la compression de la pince (3) autour du tube (P) afin que celui-ci soit déformé et assure un verrouillage mécanique du tube sur le manchon sous l'application des forces mécaniques.

2. Raccord selon la revendication 1, dans lequel une gorge annulaire (4) est formée à la périphérie externe du manchon (1) entre deux groupes de dentelure (2), la gorge (4) contenant un joint torique (5) destiné à coopérer de façon étanche avec le trou interne du tube (P) lorsque le tube est mis en coopération avec lui par compression.

3. Raccord selon la revendication 1, dans lequel les dentelures (2) sont très rapprochées, avec une forme en dents de scie dont la surface inclinée a une forme tronconique, le sommet étant tourné du côté du tube.

FIG.1.

FIG.2a.

FIG.2b.

FIG.3a.

FIG.3b.

FIG.4a.

FIG.4b.

FIG.5.